# EUROPÄISCHE PATENTSCHRIFT

(11) **EP 2 496 455 B1**
(45) Veröffentlichungstag und Bekanntmachung des Hinweises auf die Patenterteilung: **28.08.2013**
(21) Anmeldenummer: 10805577.3
(22) Anmeldetag: 02.11.2010
(51) Int. Cl.: F16C 1/22

(54) **VORRICHTUNG ZUR EINSTELLUNG VON KRAFTFAHRZEUGBREMSEN**
DEVICE FOR ADJUSTING MOTOR VEHICLE BRAKES
DISPOSITIF DE RÉGLAGE DE FREINS DE VÉHICULES AUTOMOBILES

(30) Priorität: 04.11.2009 DE 102009052235
(43) Veröffentlichungstag der Anmeldung: 12.09.2012
(73) Patentinhaber: Dürr Somac GmbH, 09366 Stollberg (DE)
(72) Erfinder: MEIER, Uwe, 09387 Jahnsdorf (DE); WIELAND, Frank, 09235 Burkhardtsdorf (DE); WEISSBACH, Kevin, 09423 Gelenau (DE)
(74) Vertreter: Patentanwälte Findeisen & Neumann
(86) Internationale Anmeldenummer: PCT/DE2010/001294
(87) Internationale Veröffentlichungsnummer: WO 2011/054346

(56) Entgegenhaltungen:
- EP-A1- 1 380 487
- WO-A2-2007/026208
- DE-A1-102005 031 120

## Beschreibung

Die Erfindung betrifft eine Vorrichtung zur Einstellung der Vorspannkraft von Bremsseilen von Kraftfahzeugbremsen, zur Betätigung einer Feststellbremse, wobei das Bremsseil als ein Verbindungselement zwischen einem im Fahrgastraum angeordneten Handbremshebel und einer auf die Räder der Hinterachse wirkenden Bremse ausgestaltet ist.

Bremsanlagen für Kraftfahrzeuge weisen neben der Betriebsbremse zum Verringern der Fahrgeschwindigkeit eine zusätzliche Feststellbremse auf, mit der das jeweilige Fahrzeug im Stillstand lagefixiert werden kann. Derartige Feststellbremsen werden überwiegend mit einem Bremsseil betätigt, dessen einer Endabschnitt im Fahrgastraum endet und dort mit einem Handbremshebel verbunden ist. Der Handbremshebel wird vorzugsweise mittels einer Ratsche nach dem Zahn-Sperrklinkenprinzip arretiert. Der andere Endabschnitt des Bremsseils ist an einer zugeordneten Fahrzeugbremse abgestützt, die folglich durch das Ziehen des Handbremshebels mit einer Kraft beaufschlagt wird und eine Feststellwirkung für das Fahrzeug bewirkt.

Damit die konkret angestrebte Bremswirkung mit einem optimalen Verhältnis zwischen Betätigungsweg des Handbremshebels und ausgelöster Bremskraft an der eigentlichen Bremsbaugruppe realisiert werden kann, wird das Bremsseil dauerhaft vorgespannt. Für diese Einstellarbeiten werden bei der Erstmontage der Fahrzeuge sowohl manuelle als auch automatisierte Vorrichtungen beim Hersteller eingesetzt.

WO 2007 / 026 208 A2 beschreibt eine diesbezügliche technische Lösung zur Einstellung bzw. Überwachung der Vorspannkraft unter Verwendung eines sog. Bremsaktuators, der in seiner Betriebsposition zeitweise in einem Kraftfahrzeug installiert wird. Dieser Bremsaktuator wird mit einem Hebel betätigt, der wahlweise das Aufbringen oder Lösen einer definierbaren Spannkraft bewirkt. Die eigentliche Prüfbaugruppe umfasst einen Sensor zur Erfassung des zurückgelegten Hebelweges während des Spannens bzw. Lösens des Bremsseiles.

Unabhängig von ihrer jeweils konkreten Konstruktion kann mit solchen Vorrichtungen bei einer Fertigung großer Stückzahlen von Fahrzeugen mit gleichartigen Einbaukriterien zweifelsfrei eine hohe Effektivität erreicht werden. Allerdings sind die automatisierten Vorrichtungen sehr kostenintensiv in der Anschaffung, während die kostengünstigeren manuell betätigbaren Vorrichtungen lediglich eine schlechte Wiederholgenauigkeit gewährleisten.

Aufgabe der Erfindung ist es, eine Vorrichtung zur Einstellung von Kraftfahrzeugbremsen zu schaffen, die kostengünstig hergestellt und mit geringem Aufwand für unterschiedliche auf ein Bremsseil aufzubringende Vorspannkräfte modifiziert werden kann.

Diese Aufgabe wird gelöst, indem die Vorrichtung einen als Gelenkkonstruktion ausgestalteten Grundkörper aufweist, der mit einer ersten Baugruppe auf einem Bodenabschnitt des Fahrgastraums abstützbar sowie mit einer zweiten Baugruppe mit dem Handbremshebel arretierbar ist und der mit einer an sich bekannten, als Handset ausgestalteten Messvorrichtung zur Erfassung der auf ein Pedalwerk in einem Kraftfahrzeug aufgebrachten Betätigungskräfte derart in Wirkverbindung gebracht wird, dass eine vom Handset ausgelöste lineare Bewegung über mindestens zwei, über eine Drehachse miteinander verbundene Hebel in eine Schwenkbewegung zur Beaufschlagung des Handbremshebels gewandelt wird. Vorteilhafte Ausgestaltungen sind Gegenstand von Unteransprüchen, deren technische Merkmale im Ausführungsbeispiel näher beschrieben werden.

Die erfindungsgemäße Vorrichtung ist zur Einstellung der Vorspannkräfte für Bremsseile von Kraftfahrzeugen geeignet, insbesondere zur Einstellung von manuell betätigbaren Feststellbremsen. Im Vergleich zu den bisher bekannten technischen Lösungen erfordert diese Vorrichtung wesentlich geringere Herstellungskosten. Gleichzeitig reduziert sich der Aufwand für Einstellarbeiten bei einer Änderung der auf die Bremsseile aufzubringenden Vorspannkräfte. Aufgrund dieser Vorteile ist die Vorrichtung an sich auch für einen Einsatz in Werkstätten geeignet. Die bevorzugte Anwendung ist jedoch die Erstmontage der Fahrzeuge beim Hersteller.

Ein Ausführungsbeispiel der Erfindung ist in der Zeichnung dargestellt und wird nachfolgend beschrieben. Es zeigen:
- Fig. 1: den Aufbau einer erfindungsgemäßen Vorrichtung in perspektivischer Ansicht
- Fig. 2: die Vorrichtung gemäß Fig. 1 in der Draufsicht
- Fig. 3: die grundsätzliche Wirkverbindung der Vorrichtung mit einem zugeordneten Handset und Darstellung des Handbremshebels in Seitenansicht
- Fig. 4: die Anordnung gemäß Fig. 3 ohne Darstellung des Handbremshebels
- Fig. 5: die Anordnung gemäß Fig. 4 in perspektivischer Ansicht

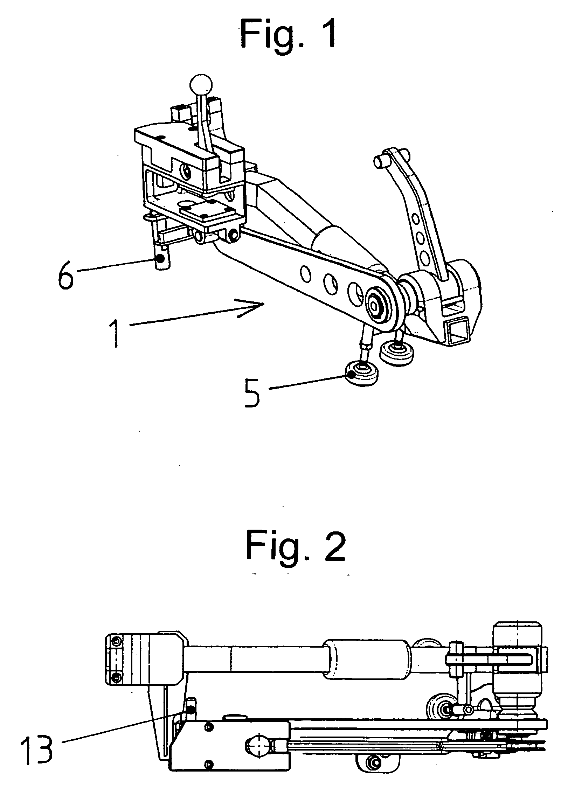

Die in der Zeichnung dargestellte Vorrichtung ist zur Einstellung der Vorspannkraft von Bremsseilen zur Betätigung einer Feststellbremse von Kraftfahrzeugen konzipiert. Hierfür weist die Vorrichtung einen als Gelenkkonstruktion ausgestalteten Grundkörper 1 auf, dessen grundsätzlicher Aufbau insbesondere aus Fig. 1 und Fig. 2 ersichtlich ist.

Der Grundkörper 1 besteht aus mindestens zwei Hebeln 2 und 3, wobei diese Hebel 2; 3 auf einer gemeinsamen Drehachse 4 abgestützt sind. Der Grundkörper 1 kann mit einer Baugruppe auf dem Boden des Fahrgastraumes abgestützt werden. Die Ausgestaltung dieser Baugruppe wird den jeweils konkreten Einbaubedingungen angepasst. Gemäß der Zeichnung sind hierfür beispielsweise zwei Stellfüße 5 und zwei Bolzen 6 vorgesehen. Mit einer weiteren Baugruppe kann der Grundkörper 1 mit dem Handbremshebel 7 arretiert werden. Auch die Ausgestaltung dieser Baugruppe wird den Einbaubedingungen konkret angepasst, wobei gemäß der Zeichnung hierfür beispielsweise zwei Klemmbacken 8 und 9 vorgesehen sind. Zur Betätigung dieser Klemmbacken 8 und 9 kann ein Excenterhebel 10 verwendet werden.

Unabhängig vom Aufbau des Grundkörpers 1 - der in Abhängigkeit der jeweils konkreten Einsatzbedingungen etwas modifiziert werden kann - ist es im vorliegenden Sachverhalt wesentlich, dass dieser Grundkörper 1 mit einer als Handset 11 ausgestalteten Messvorrichtung zur Erfassung der auf ein Pedalwerk in einem Kraftfahrzeug aufgebrachten Betätigungskräfte derart in Wirkverbindung gebracht wird, dass eine vom Handset 11 ausgelöste lineare Bewegung über die mindesten zwei Hebel 2 und 3 in eine Schwenkbewegung zur Beaufschlagung des Handbremshebels 7 gewandelt wird. Solche Handsets sind an sich bekannt, so dass auf nähere diesbezügliche Darlegungen verzichtet werden kann. Hierzu wird lediglich beispielsweise auf DE 403 06 723.5 "Prüfgerät für Kraftfahrzeugbaugruppen" verwiesen.

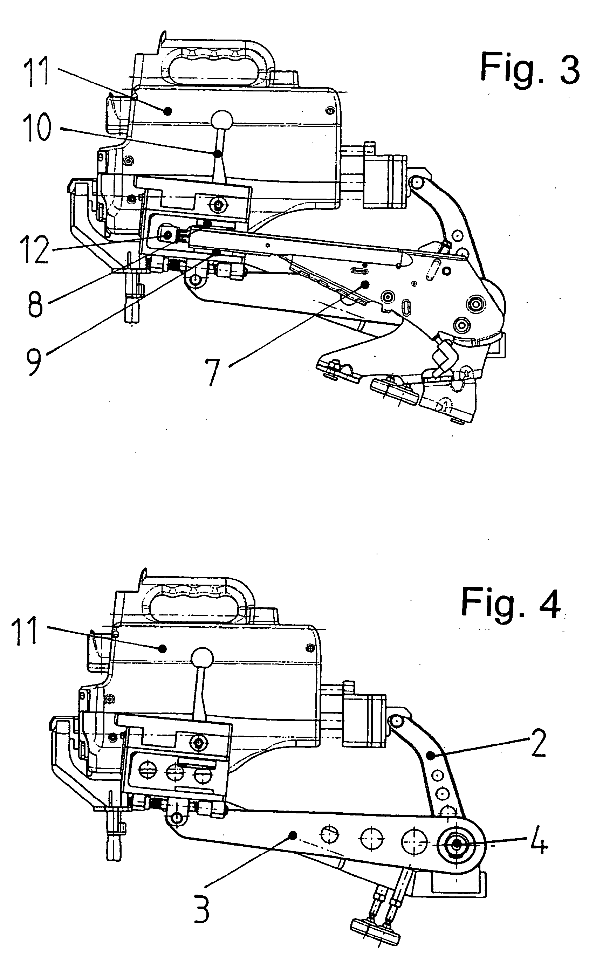

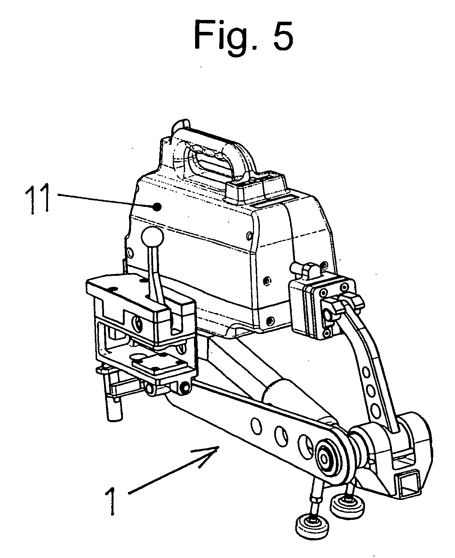

Der funktionelle Zusammenhang zwischen dem Grundkörper 1 und dem Handset 11, der die Einstellung der Feststellbremse bewirkt, ist insbesondere aus den Fig. 3 bis Fig. 5 ersichtlich und wird nachfolgend beschrieben.

Zunächst wird der Grundkörper 1 der Vorrichtung in das Fahrzeug eingebracht. Gemäß dem dargestellten Ausführungsbeispiel erfolgt dies durch Aufstecken auf zwei Bolzen 6 und ein zusätzliches Abstützen über zwei Stellfüße 5 auf dem Fahrzeugboden.

Danach wird der Grundkörper 1 auf dem Handbremshebel 7 arretiert. Hierzu wird der Handbremshebel 7 über die zwei Klemmbacken 8 und 9, die über den Excenterhebel 10 betätigt werden, geklemmt. Bei diesem Klemmen des Handbremshebels 7 wird gleichzeitig der Handbremshebelknopf 12 betätigt und eine Einlegesperre 13 für das Handset 11 wird zurückgezogen.

Nunmehr wird das Handset 11 in den Grundkörper 1 eingelegt und die Einstellung der Vorspannkraft für das Handbremsseil kann durchgeführt werden. Der Einstellvorgang erfolgt entsprechend den Herstellervorgaben, wobei beispielsweise folgender Ablauf möglich ist:
- Anfahren der Position "Stellung erste Raste"
- Spannen des Handbremsseils mit einem Schrauber, bis am vorgegeben Messpunkt am Handbremshebel 7 eine bestimmte Kraft erreicht ist, dann automatische Abschaltung des Schraubers
- mehrfaches Recken des Handbremsseiles 7 mit einer definierten Kraft
- Anfahren der Position "Stellung dritte Raste"
- erneutes Spannen des Handbremsseiles
- nach Erreichen einer vorab definierten Kraft erfolgt eine automatische Abschaltung des Schraubers und eine Rückführung in Grundstellung
- Entnahme des Handsets 11
- Lösen des Grundkörpers 1 vom Handbremshebel 7
- Entnahme des Grundkörpers 1 aus dem Fahrzeug

Für das Spannen des Handbremsseils wird die lineare Bewegung des Handsets 11 über die auf der Drehachse 4 angeordneten Hebel 2; 3 in eine Schwenkbewegung umgesetzt.

Die Übersetzungsverhältnisse des Einstellwerkzeuges und des Handbremsehebels 7 sind in der Software des Handsets 11 hinterlegt. Somit ist es möglich, die am Handset 11 gemessenen Kräfte und Wege in Kräfte und Wege am Messpunkt Handbremshebel 7 umzurechnen.

### Bezugszeichenliste

- 1: Grundkörper
- 2: Hebel
- 3: Hebel
- 4: Drehachse
- 5: Stellfüße
- 6: Bolzen
- 7: Handbremshebel
- 8: Klemmbacke
- 9: Klemmbacke
- 10: Excenterhebel
- 11: Handset
- 12: Handbremshebelknopf
- 13: Einlegesperre

## Patentansprüche

1. Vorrichtung zur Einstellungs der Vorspannkraft von Bremsseilen von Kraftfahrzeugbremsen, zur Betätigung einer Feststellbremse, wobei das Bremsseil als ein Verbindungselement zwischen einem im Fahrgastraum angeordneten Handbremshebel und einer auf die Räder der Hinterachse wirkenden Bremse ausgestaltet ist, **dadurch gekennzeichnet,**
**dass** die Vorrichtung einen als Gelenkkonstruktion ausgestalteten Grundkörper (1) aufweist, der mit einer ersten Baugruppe auf einem Bodenabschnitt des Fahrgastraums abstützbar sowie mit einer zweiten Baugruppe mit dem Handbremshebel (7) arretierbar ist und der mit einer an sich bekannten, als Handset (11) ausgestalteten Messvorrichtung zur Erfassung der auf ein Pedalwerk in einem Kraftfahrzeug aufgebrachten Betätigungskräfte derart in Wirkverbindung gebracht wird, dass eine vom Handset (11) ausgelöste lineare Bewegung über mindestens zwei, über eine Drehachse (4) miteinander verbundene Hebel (2; 3) in eine Schwenkbewegung zur Beaufschlagung des Handbremshebels (7) gewandelt wird.

2. Vorrichtung nach Anspruch 1, **dadurch gekennzeichnet,**
**dass** die Übersetzungsverhältnisse zwischen dem Einstellwerkzeug für das Bremsseil und dem Handbremshebel (7) als Software im Handset (11) hinterlegt sind.

3. Vorrichtung nach Anspruch 1, **dadurch gekennzeichnet,**
**dass** bei der Arretierung des Grundkörpers (1) auf dem Handbremshebel (7) gleichzeitig der Handbremshebelknopf (12) betätigbar und eine Einlegesperre (13) für das Handset (11) zurückziehbar ist.

4. Vorrichtung nach Anspruch 1, **dadurch gekennzeichnet,**
**dass** der Grundkörper (1) zwei Bolzen (6) und zwei Stellfüße (5) aufweist zur Abstützung auf einem Bodenabschnitt des Fahrgastraums.

5. Vorrichtung nach Anspruch 1, **dadurch gekennzeichnet,**
**dass** der Grundkörper (1) zwei Klemmbacken (8; 9) aufweist zur Arretierung des Handbremshebels (7).

6. Vorrichtung nach Anspruch 5, **dadurch gekennzeichnet,**
**dass** die Klemmbacken (8; 9) über einen Excenterhebel (10) betätigbar sind.

## Claims

1. A device for adjusting the preloading force of brake cables of motor vehicle brakes for actuating a parking brake, wherein the brake cable is designed as a connecting element between a hand brake lever, arranged in the passenger compartment, and a brake acting on the wheels of the rear axle, **characterized**
**in that** the device comprises a base body (1) designed as an articulated structure, which can be supported on a floor section of the passenger compartment by means of a first subassembly, and which can be locked with a second subassembly by means of the hand brake lever (7), and which is brought into an operative linkage with a measuring device, known as such and designed as a handset (11), for acquiring the actuating forces applied to a pedal mechanism in a motor vehicle in such a way that a linear motion triggered by the handset (11) is converted into a pivoting motion for actuating the hand brake lever (7) via at least two levers (2;3), which are connected to each other through a rotary axis (4).

2. The device according to claim 1, **characterized**
**in that** the transmission ratios between the adjusting tool for the brake cable and the handbrake lever (7) are deposited as a software in the handset (11).

3. The device according to claim 1, **characterized**
**in that** when locating the base body (1) on the hand brake lever (7), simultaneously, the hand brake lever knob (12) can be actuated and an insertion lockout (13) can be retracted by the handset (1).

4. The device according to claim 1, **characterized**
**in that** the base body (1) comprises of two pins (6) and two feet (5) for the support on a floor section of the passenger compartment.

5. The device according to claim 1, **characterized**
**in that** the base body (1) comprises of two clamping jaws (8; 9) for locking the hand brake lever (7).

6. The device according to claim 5, **characterized**
**in that** the clamping jaws (8; 9) can be actuated via a cam lever (10).

## Revendications

1. Dispositif de réglage de la tension initiale de câbles de frein de véhicules pour l'actionnement d'un frein de stationnement, où le câble de frein est conçu en tant qu'élément de raccordement qui, lui, est disposé entre un levier de frein à main situé dans l'habitacle et un frein agissant sur les roues de l'essieu arrière, **caractérisé en ce**
**que** le dispositif comprend un corps de base (1) ayant la forme d'une structure articulée, dont un premier sous-composant permet l'appui sur une partie de sol de l'habitacle et dont un deuxième sous-composant permet le verrouillage avec le levier de frein à main (7), et que ce corps de base (1) peut être mis en liaison fonctionnelle avec un dispositif de mesure connu en soi et réalisé sous forme d'appareil portatif (11) qui, lui, sert à saisir les forces d'actionnement exercées sur une pédale d'un véhicule, de telle sorte qu'un mouvement linéaire déclenché par l'appareil portatif (11) est transformé, par le biais d'au moins deux leviers (2 ; 3) reliés l'un à l'autre par un axe de rotation (4), en un mouvement pivotant qui entraîne la sollicitation du levier de frein à main (7).

2. Dispositif suivant la revendication 1, **caractérisé en ce**
**que** les rapports de transmission entre l'outillage de réglage pour le câble de frein et le levier de frein à main (7) sont mémorisés sous forme d'un logiciel dans l'appareil portatif (11).

3. Dispositif suivant la revendication 1, **caractérisé en ce**
**que** lors du verrouillage du corps de base (1) sur le levier de frein à main (7), on peut actionner tant le bouton poussoir de frein à main (12) qu'un déblocage d'accès (13) à l'appareil portatif (11).

4. Dispositif suivant la revendication 1, **caractérisé en ce**
**que** le corps de base (1) est muni de deux boulons (6) et de deux pieds (5) assurant l'appui sur une partie de sol de l'habitacle.

5. Dispositif suivant la revendication 1, **caractérisé en ce**
**que** le corps de base (1) est doté de deux mordaches de serrage (8; 9) permettant le blocage du levier de frein à main (7).

6. Dispositif suivant la revendication 5, **caractérisé en ce**
**que** les mordaches de serrage (8; 9) peuvent être actionnées au moyen d'un levier excentrique (10).
